# EUROPEAN PATENT APPLICATION

(11) **EP 4 660 174 A1**
(43) Date of publication of application: **10.12.2025**
(21) Application number: 25179226.3
(22) Date of filing: 27.05.2025
(51) Int. Cl.: C05F 5/00, C05F 9/04, C05F 11/00, C05F 11/08, C05F 17/20

(54) **CULTIVATION COMPONENT, METHOD OF PRODUCING THE COMPONENT, ORGANIC CULTIVATION SUBSTRATE AND USE OF BIOMASS**

(30) Priority: 06.06.2024 PL 44876724
(71) Applicant: Uniwersytet Przyrodniczy we Wroclawiu, 50-375 Wroclaw (PL)
(72) Inventor: Adamczewska-Sowinska, Katarzyna, 51-505 Wroclaw (PL); Bekier, Jakub, 50-250 Wroclaw (PL); Jamroz, Elzbieta, 51-107 Wroclaw (PL); Sowinski, Józef, 51-505 Wroclaw (PL)

(57) **Abstract**

A cultivation component comprising lignocellulosic biomass of *Salix* sp. willow chips subjected to composting, characterised by the inclusion of *Miscanthus x giganteus* chaff and biodegradable by-products from fodder silage production, present in a carbon-to-nitrogen weight ratio of 1:25 to 1:30, the entirety of which is treated with the enzymatic system of *Peniophora gigantea.*

The cultivation component comprises a mixture of *Salix* sp. willow chips and *Miscanthus x giganteus* chaff, comminuted to a particle size of up to 5 mm in diameter; and Biodegradable by-products from fodder silage production, added in an amount to achieve an optimal carbon-to-nitrogen (C/N) ratio of 25:1 to 30:1 (weight/weight, dry matter basis). The entire mixture is inoculated with a biological preparation of *Peniophora gigantea* and then irrigated to a moisture content of 40-50% (by weight). The process is conducted for a duration of at least 4 months, culminating in a stable and homogeneous product. The resulting product is a cultivation component that replaces peat in horticultural growing media.

## Description

This invention provides a cultivation component and a horticulture substrate, advantageously employed for cultivating vegetable seedlings as an alternative to peat. Furthermore, it discloses a method for manufacturing this component utilizing lignocellulosic biomass derived from domestic resources.

Peatlands and their peat resources hold strategic importance due to the significant quantities of CO₂ they release into the atmosphere when disturbed or degraded. Reducing the use of peat in production directly mitigates its negative contribution to climate change and the greenhouse effect. Peatlands are also vital due to their exceptional water retention capabilities and their significant influence on local and regional water cycles. Globally, implementing restrictions on peatland use is crucial, particularly where viable alternatives to peat exist. Although peatlands are technically renewable resources, their extremely slow rate of regeneration renders them highly sensitive and strategically important ecosystems. Peatlands are also unique due to their specialized flora and fauna communities, which significantly contribute to enhanced biodiversity. Increasingly, regulations are being implemented to curtail the exploitation of these valuable resources. Poland, for example, currently prohibits the mining and use of peat for heating.

Many peat substitutes are used in horticulture. One of them is coconut fibre. The process of coconut fibre extraction requires significant investment in the preparation and purification of this material. This process involves soaking the coconut palm fruits in a saline solution. Moreover, it has detrimental effects on the aquatic environment and contributes to elevated CO₂ emissions. Greenhouse gas emissions are attributable to the logistical requirements of importing coconut fiber from geographically remote locations to regions with sophisticated horticultural industries. This also increases transportation costs.

A critical focus in horticulture is the pursuit of alternative solutions and the reduction of peat and coconut fibre usage. A prevalent alternative substrate is compost derived from plant and other organic waste materials.

Potential limitations of utilizing waste composts include elevated salinity levels, unsuitable pH, and the possible presence of pathogens. A notable constraint arising from sustainable management principles may be the substitution of peat and coconut fibre substrates with locally sourced biomass.

Willow (*Salix* sp.) is a species well-adapted to Polish habitat conditions and has a centuries-long history of use as a wickerwork material, a medicinal plant, and for streambank stabilization (fascine). The aesthetic contribution of willow to the landscape is also noteworthy. In recent years, the application of this species has broadened; harvested willow shoots (wood chips) have become a valuable biomass source for energy production. Environmental and energy policies aimed at curbing CO₂ emissions and alleviating the greenhouse effect and global warming linked to fossil fuels were the primary catalysts for this increased utilization of willow.

The utilization of biomass from giant miscanthus (*Miscanthus x giganteus* JM Greef & Deuter ex Hodk. & Renvoize), an East Asian introduced to Poland, follows a similar trend. This species exhibits excellent adaptation to Polish habitat conditions and presents a valuable supplementary source of lignocellulosic raw materials. Miscanthus, a perennial species, is characterized by a one-year development cycle allowing for an annual harvest of biomass. This is of great importance from an organisational point of view (the use of willow is most profitable in 3-4-year regrowth cycles). Furthermore, Miscanthus biomass exhibits significant heterogeneity, comprising thicker, more lignified stem fractions with elevated lignin content and finer, more delicate leaf fractions characterized by a higher concentration of mineral compounds.

The increasing importance of lignocellulosic biomass has been driven by the adoption of policies supporting renewable energy resources, commencing in the early 2000s. The Energy Directives mandated restrictions on the use of non-renewable fuels across all EU member states and promoted actions supporting the growth of the Renewable Energy Sources (RES) sector. Consequently, willow emerged as a primary plant species utilized for energy production, and miscanthus plantations were established with the same objective. The market for lignocellulosic biomass is currently facing headwinds due to competition from forest biomass and imports, exacerbated by the reduced value of green certificates, creating sales difficulties for producers. The total area dedicated to short rotation coppice (SRC) within EU member states remained largely unchanged between 2015 and 2020. Given the 20-25 year productive lifespan of typical willow and miscanthus plantations, the current decline in interest in renewable energy sources, particularly biomass-derived fuels, presents significant challenges for farmers who have invested in cultivating these species. In the absence of a viable market, it is imperative to explore alternative applications for this biomass.

Willow and miscanthus chips offer a viable substitute for pine bark or shredded wood biomass derived from maintenance pruning. Wood chips constitute an effective material for mitigating evaporation and suppressing weed proliferation in ornamental plantings. Willow chips exhibit a more heterogeneous size distribution, with element diameters ranging from 1 to 6 cm. Miscanthus biomass primarily occurs in the form of chaff, and its significant proportion of finer fractions renders it susceptible to wind dispersal. Willow chips and miscanthus chaff are predominantly unprocessed mulching materials, thus their scope of application is considerably limited. Nonetheless, these materials represent a substantial source of organic carbon and, following an appropriately conducted composting process, can be utilized, inter alia, in the production of horticultural seedlings.

Lignocellulosic biomass derived from short rotation coppices can serve as a fundamental constituent in biomass composting processes. The paramount objective, however, is to curtail the exploitation of peat for horticultural substrate production and to conserve peatlands, which are invaluable to the global ecosystem.

Patent P.435103 describes a cultivation component produced from *Salix* sp. willow chip biomass, having an average particle size of 15 mm and enriched with mineral nitrogen (ammonium nitrate). The carbon to nitrogen ratio ranges from 1:25 to 1:30. At the composting stage, biomass stimulation was also used with a microbiological preparation containing *Peniophora gigantea.* The limitations of this substrate include the necessity for synthetic nitrogen fertilizers and the excessively large size of the biomass particles.

The objective of this invention was to produce a horticulture substrate from natural, locally sourced biodegradable raw materials, wherein mineral fertilizers are replaced by nitrogen-rich plant biomass derived from organic by-products or biomass unsuitable for feed or industrial applications due to its parameters.

A further objective is to develop a method for substrate production by selecting an appropriate aerobic biostabilization technique for green biomass, determining component ratios and fragmentation, maintaining optimal moisture levels, and utilizing mycelia to decompose the lignocellulosic complex.

Unexpectedly, it was discovered that the aerobic biostabilization process within composting yields a valuable horticulture substrate capable of completely or partially replacing peat in mixtures. Enriched with nitrogen compounds from silage, willow chips and miscanthus chaff are transformed through decomposition and humification (involving lignin) into an organic-mineral substrate exhibiting peat-like properties.

The essence of this invention resides in a cultivation component comprising lignocellulosic biomass of *Salix* sp. willow chips, **characterised by** the inclusion of *Miscanthus x giganteus* chaff and biodegradable by-products from fodder silage production, present in a carbon-to-nitrogen weight ratio (m:m) of 1:25 to 1:30, the entirety of which is treated with the enzymatic system of *Peniophora gigantea.*

It is preferable that the size of the willow and miscanthus particles is no larger than 0.5 cm.

The essence of the method for producing a cultivation component, involving the aerobic biostabilization of composted lignocellulosic biomass, lies in the steps of: comminuting *Salix* sp. willow chips and *Miscanthus x giganteus* chaff; subsequently mixing these with biomass by-products from fodder silage production to form a compost pile; inoculating the pile with a biological preparation of *Peniophora gigantea;* and maintaining a moisture level of 40-50% for a period of 4-6 months, with continuous monitoring and supplementation of any water deficits.

It is advantageous to comminute willow and miscanthus chips to a fraction of no more than 0.5 cm.

Advantageously, the compost pile is formed upon a surface lined with a non-woven fabric.

Advantageously, the comminuted willow and miscanthus chips and the silage biomass are combined in a weight ratio (m:m) of 1:1:1.5, respectively.

Advantageously, at least 0.6 litres of the mycelium preparation is dissolved in 5 litres of water and distributed over a 0.9-1.2 m³ pile.

Thorough mixing of the pile after each watering is advantageous for the process.

It is advantageous if the pile is covered with a non-woven fabric.

The organic growing substrate according to the invention, comprising at least comminuted woody parts of plants subjected to an aerobic biostabilization process, is characterized by containing the cultivation component as defined in claim 1 or 2 in a proportion of 25 to 100% by weight, with the balance being deacidified high-moor peat.

A further essential element is the utilization of a mixture comprising willow chips, miscanthus chaff, and biodegradable by-products from silage feed production, subjected to aerobic biostabilization stimulated by a preparation of *Peniophora gigantea,* to produce a component of the cultivation substrate.

In accordance with the invention, composted lignocellulosic biomass undergoes a process of bioconversion coupled with chemical stimulation. To this end, biomass with an elevated nitrogen content is employed in a quantity sufficient to establish an optimal carbon-to-nitrogen ratio (at a level of 1:25 to 1:30), calculated on a dry mass basis. Nitrogen, primarily sequestered within organic compounds, is progressively released through the decomposition of biomass, thereby becoming available for assimilation by microorganisms. The duration of the composting process is contingent upon prevailing external conditions, notably ambient temperature and humidity levels. The composted mass comprising willow chips, miscanthus chaff, and biomass from forage plants is transformed to a state characterized by modified lignocellulosic linkages. Biomass derived from field plants can be utilized without prior comminution owing to its lower degree of lignification and smaller particle size. Maintaining an appropriate biomass structure is essential for ensuring optimal air and water balance, a key factor in effective composting.

Furthermore, the substrate produced according to this invention may be subjected to controlled nutrient enrichment. The incorporation of this substrate in horticultural practices promotes a decrease in the demand for peat sourced from natural habitats, consequently playing a significant role in their conservation and lessening the release of CO₂ and other climate-altering gases.

This substrate is characterized by favorable physical properties, including an optimal structure ensuring proper aeration, high porosity and water retention capacity, substantial sorption capacity and nutrient availability, facile pH regulation, sterility, and the absence of phytotoxic substances. This substrate provides growth conditions for horticultural plants that are comparable to those offered by conventional horticulture substrates.

The resulting substrate exhibits quality parameters comparable to those of conventional peat substrates, specifically an organic carbon content of ≥ 30% dry matter; total nitrogen content of 0.5 - 1.0% dry matter; a fractional composition of humic compounds (CKH:CKF ratio of 0.5-1.0); and a retention capacity of plant-available water (pF 2.0 - pF 3.7 ≥ 60% H₂O v/v).

A key advantage of this invention lies in the elimination of the necessity for synthetic nitrogen supplementation during the composting of lignocellulosic biomass derived from short rotation coppices. The incorporation of green biomass with a high concentration of nitrogenous compounds significantly promotes advantageous transformations that govern the proper progression of the composting process and the quality of the resulting product. This innovative solution aligns with the principles of the circular economy, facilitating the recycling of organic matter and minerals while mitigating its impact on climate change.

Furthermore, the utilization of aerobic organic recycling represents a highly rational methodology for the management of various biomasses and by-products, such as substandard silage or low-grade, voluminous plant fodder.

A further significant advantage lies in the reduction of peat exploitation, a practice prevalent in current horticultural substrates, and the preservation of peatlands, ecosystems of considerable global ecological value.

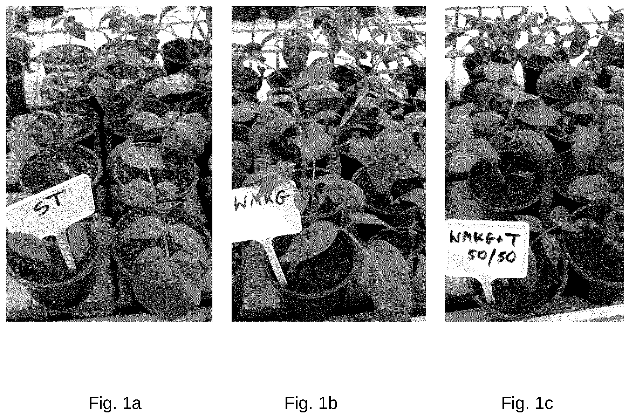

The invention is explained in greater detail through the subsequent examples of embodiments and the accompanying figure, wherein Fig. 1a illustrates a tomato seedling cultivated on the inventive component mixture in comparison to a seedling grown in the ST peat substrate (100% peat - control), Fig. 1b illustrates a tomato seedling cultivated on the inventive component mixture seedling grown in the WMKG (100% component), and Fig. 1c illustrates a tomato seedling cultivated on the inventive component mixture seedling grown in the WMKG+T 50/50 (50% component + 50% peat).

### Example:

Willow chips (*Salix viminalis* L.) and miscanthus (*Miscanthus x giganteus* J.M. Greef & Deuter ex Hodk. & Renvoize) were comminuted to a particle size of approximately 5 mm using a Raffinatore Colibri COL/RR/2010 biomass mill (POR Micucci System Srl). The comminution of biomass serves to ensure optimal moisture and aeration within the compost pile, thereby accelerating the transformation of organic matter. Subsequently, the aforementioned components were combined, and biomass derived from a forage mixture of field crops was incorporated into the blend. The harvested forage mixture was promptly compressed and ensiled according to standard agricultural practices in large-format bales enclosed in polypropylene film. The ensiling process proved unsuccessful, rendering the resulting biomass unsuitable for animal feed and presenting a management challenge due to its recalcitrant nature. However, such biomass is rich in organic nitrogen compounds (Drozd i in. Organic Matter Transformation and Humic Indices of Compost Maturity Stage During Composting of Municipal Solid Waste In: The Role of Humic Substances in the Ecosystems and in Environmental Protection. Ed. Drozd J., Gonet SS, Senesi N., Weber J. PTSH, Wroclaw 1997, 855 - 861*; Humus maturity indices of composts. IN: Humic substances in soils and the environment. Ed. D* 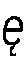 *bska B., Gonet SS, PTSH, Wroclaw 2003, 75 - 94; Ka* 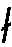 *uża- Ha* 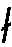 *adyn et al. The dynamics of some physical and physico-chemical properties during composting of municipal solid wastes and biomass of energetic plants. Soil Science Annual 69, 3: 155-159, 2018; Humic substances of differently matured composts produced from municipal solid wastes and biomass of energetic plants. Soil Science Annual 70, 4: 292-297, 2019;* Jamroz E. et al. The contribution of water extractable forms of plant nutrients to evaluate MSW compost maturity: a case study. Sci. Rep. 2020, 10, 12842)*.* The quantity of silage incorporated must be sufficient to establish a final carbon-to-nitrogen ratio within the range of 1:25 to 1:30, expressed as a weight-to-weight ratio (m:m) on a dry matter basis. The nitrogen content, expressed on a dry matter basis, was determined to be 1.75% for the silage, 0.21% for the miscanthus biomass, and 0.6% for the willow biomass.

The initial mixture comprised willow chips, miscanthus chaff, and silage biomass in a weight ratio (m/m) of 1:1:1.5, respectively.

The compost pile was formed on a surface lined with non-woven fabric. The purpose of this measure was to enable controlled process management and observation within the biomass, while also providing environmental containment by minimizing potential leachate runoff from the pile during mixing and/or irrigation cycles.

Ensuring the homogeneity of the component mixture within the compost pile was a key consideration during its construction. Inoculation of the compost pile during its formation was performed by injecting an aqueous suspension of *Peniophora gigantea* mycelium (family *Phanerochaetaceae*), obtained from the "POSZWALD" Mycelium and Biopreparations Factory, with the dosage adhering to the manufacturer's guidelines. To ensure uniform inoculation of the biomass, the mycelium preparation was diluted in water at a ratio of 0.6 litres of mycelium per 5 liters of water, and this suspension was sequentially applied via spraying onto the compost pile during its construction at a dosage rate of 15 liters per 0.9 to 1.2 m³. Furthermore, the compost pile was adjusted to an optimal moisture content (approximately 50% relative humidity). Subsequent to its construction, the biomass pile was covered with a non-woven fabric to mitigate the impact of solar radiation and excessive moisture loss through evaporation. Regular monitoring of the moisture content was performed every 7 to 10 days, with any observed water deficit being addressed through supplementary watering. Subsequent to each irrigation event, the compost pile underwent thorough mixing. The objective of the sequential mixing was to yield a compost characterized by a fibrous texture incorporating fragments of willow wood and miscanthus residues.

The composting process (transformation of organic matter) was conducted under ambient environmental conditions without artificial temperature stimulation, with unrestricted access to atmospheric oxygen, and with moisture content regulated through irrigation as required.

The optimization of critical parameters, including moisture content, temperature, oxygen availability, and the carbon-to-nitrogen ratio, provided the requisite environment for the microbial consortia involved in the biotransformation of organic matter into humic substances, thereby ensuring the proper progression of the composting process.

This process results in the conversion of organic matter into a final product with properties analogous to organic soil or peat. The aforementioned optimal factors establish the requisite conditions for the proliferation and activity of the microbial consortia responsible for these biotransformations. Composting can be implemented as a natural process, occurring under ambient conditions, or as an active process, wherein the biotransformation of organic matter takes place within controlled biostabilization chambers. Within a biostabilization chamber, the precise regulation of parameters governing the process trajectory is more readily achievable. A paramount factor governing the proliferation and metabolic activity of the microbial consortia involved in composting is the optimal carbon-to-nitrogen (C/N) ratio. The maintenance of all parameters at optimal levels induces a rapid thermophilic phase, characterized by a temperature increase up to approximately 70°C, and accelerates substantial transformations within the composting material driven by microbiological and physicochemical processes.

The composting process is characterized by a sequence of four distinct phases: the mesophilic phase, the thermophilic phase, the stabilization phase, and the maturation phase. During the initial mesophilic phase, the temperature of the composting biomass equilibrates with the ambient temperature, whereupon the proliferation of mesophilic microorganisms, predominantly bacteria, initiates the decomposition of readily available organic compounds, resulting in the release of substantial thermal energy and a subsequent temperature increase to the range of 40-50°C.

Once temperatures within the composting mass exceed this range, the process transitions into the subsequent thermophilic phase. The temperature profile within the composting mass is primarily governed by its moisture content and the initial carbon-to-nitrogen (C/N) ratio of the feedstock. During this thermophilic phase, the elevated temperatures facilitate the sanitization of the composting material through the inactivation of pathogenic microorganisms and the devitalization of pests. During this phase, thermophilic bacteria become the predominant microbial community, facilitating the mineralization of readily available organic compounds into simpler inorganic forms such as carbon dioxide (CO₂), water (H₂O), nitrate ions (NO₃⁻), phosphate ions (PO₄³⁺), sulphate ions (SO₄²⁻), and other mineral constituents. Temperature gradients exist within the composting pile, with the core exhibiting the highest temperatures and the periphery lower temperatures; therefore, periodic mixing of the composting material and consistent temperature monitoring are crucial for process uniformity and optimization.

Following the thermophilic phase, the composting biomass undergoes a cooling and stabilization period, during which the synthesis of humic substances and the formation of organo-mineral complexes take place.

During this stabilization phase, the rates of mineralization (decomposition) and humification (synthesis of humic substances) achieve a state of equilibrium. This stabilization stage is considered the culmination of the bio-oxidative and melanisation processes affecting organic compounds. The composting material exhibits a noticeable increase in colour intensity, becoming darker. The final maturation phase is characterised by the attainment of a stable and uniform temperature profile throughout the entire compost pile, reaching equilibrium with the ambient temperature.

During mineralization under aerobic conditions, the microbiological decomposition of organic compounds results in the liberation of simple inorganic compounds, including plant-available mineral forms of nitrogen (N-NH₄⁺ and N-NO₃⁻), the quantitative dynamics of which can serve as indicators of appropriate compost maturity.

The aforementioned treatments facilitated an accelerated composting process, which was completed within a period of five months. The application of chemical and microbiological stimulation resulted in an augmented activity of the enzymatic complex secreted by *Peniophora gigantea,* leading to a significant acceleration in the biotransformation rate of lignocellulosic compounds within the willow wood substrate. Subsequent to the composting process, the resulting biomass exhibited an optimal particle size distribution and structural integrity, rendering it suitable for direct application without the necessity of packaging.

The prepared component underwent vegetation trials, wherein it was evaluated as a constituent of the growth substrate for vegetable seedling production. Tomato plants were selected for these vegetation trials based on the following criteria: a) their status as a commonly cultivated vegetable species; b) the well-established knowledge of their nutritional and environmental requirements for optimal growth and development; c) their adaptability to cultivation both under field and controlled cultivation systems; and d) their primary mode of propagation via seedlings.

For these trials, a growth substrate incorporating the component according to the present invention was utilized in the following experimental variants:
A: 100% cultivation component;
B: 50% cultivation component + 50% peat;
C: 25% cultivation component + 75% peat;
   (deacidified high peat was used in variants A, B, C)
D: Control Sample (Comparative Object): 100% peat substrate, derived from deacidified high peat with mineral amendments, without the inclusion of the cultivation component according to the invention.

Across all experimental variants, mineral nutrients were supplemented to levels considered optimal for the cultivated tomato species.

Based on the collected observations and quantitative measurements, tomato seedlings cultivated in the substrate incorporating the cultivation component according to the invention exhibited predominantly superior characteristics compared to those grown in the 100% peat control substrate (Table 1, Fig. 1a-c). Tomato plants cultivated in a substrate comprising 50% of the cultivation component according to the invention and 50% peat exhibited a 39% increase in height and a 26.4% greater horizontal extent compared to the control sample. The number of leaves per plant did not exhibit any significant variation across the tested substrate variants. The biomass of the plants' above-ground parts exhibited a 96.5% increase in mass. A reduction in the proportion of the cultivation component according to the invention within the substrate to 25% resulted in tomato plants with marginally reduced height, horizontal extent, and above-ground biomass; however, these parameters still exhibited significant increases of 20.9%, 18.8%, and 62.4%, respectively, when compared to the control sample. The number of leaves was on average 5.5% lower and the root mass was 26.7% lower than in the peat substrate.

**Table 1. Effect of substrate composition on tomato seedling quality in relation to the characteristics of seedlings grown in peat substrate (% of increasing)**

| Morphological features of plants | Cultivation component share in the substrate [%] | | |
|---|---|---|---|
| | 100 | 50 | 25 |
| Plant height | 26.2 | 39.0 | 20.9 |
| Horizontal extent | -3.6% | 26.4 | 18.8 |
| Number of leaves | 1.8 | 1.8 | -5.5% |
| Above-ground biomass per plant | 24.7 | 96.5 | 62.4 |
| Root biomass per plant | 35.6 | -8.9% | -26.7% |

## Claims

1. A cultivation component comprising lignocellulosic biomass of *Salix* sp. willow chips, **characterized by** the inclusion of *Miscanthus x giganteus* chaff and biodegradable by-products from fodder silage production, present in a carbon-to-nitrogen weight ratio (m:m) of 1:25 to 1:30, the entirety of which is treated with the enzymatic system of *Peniophora gigantea.*

2. The cultivation component according to claim 1, **characterized in that** the size of the willow and miscanthus particles is no more than 0.5 cm.

3. A method for producing a cultivation component, involving the aerobic biostabilization of composted lignocellulosic biomass, lies in the steps of: comminuting *Salix* sp. willow chips and *Miscanthus x giganteus* chaff; subsequently mixing these with biomass by-products from fodder silage production to form a compost pile; inoculating the pile with a biological preparation of *Peniophora gigantea;* and maintaining a moisture level of 40-50% for a period of 4-6 months, with continuous monitoring and supplementation of any water deficits.

4. The method according to claim 3, **characterized in that** the willow and miscanthus chips are comminuted to a fraction of at most 0.5 cm.

5. The method according to claim 3, **characterized in that** the ground willow and miscanthus chips and the silage biomass are mixed in a weight ratio m:m of 1:1:1.5, respectively.

6. The method according to claim 3, **characterized in that** at least 0.6 litres of the mycelium preparation is dissolved in 5 litres of water and distributed onto a 0.9 - 1.2 m³ pile.

7. The method according to claim 3, **characterized in that** the compost pile is formed on a surface lined with a non-woven fabric.

8. The method according to claim 3, **characterized in that** after each watering the pile is thoroughly mixed.

9. The method according to claim 3, **characterized in that** the pile is covered with a non-woven fabric.

10. The organic cultivation substrate comprising at least comminuted woody parts of plants subjected to an aerobic biostabilization process, **characterised in that** it contains the cultivation component as defined in claim 1 or 2 in a proportion of 25 to 100% by weight, with the balance being deacidified high-moor peat.

11. The utilization of a mixture comprising willow chips, miscanthus chaff, and biodegradable by-products from silage feed production, subjected to aerobic biostabilization stimulated by a preparation of *Peniophora gigantea,* to produce a component of the cultivation substrate.
